# EUROPEAN PATENT SPECIFICATION

(11) **EP 2 892 194 B1**
(45) Date of publication and mention of the grant of the patent: **29.11.2017**
(21) Application number: 13793843.7
(22) Date of filing: 23.07.2013
(51) Int. Cl.: H04L 29/06, H04L 1/22, H04L 1/20, H04L 1/00, H04L 5/14

(54) **MEDIA STREAM TRANSMISSION METHOD AND DEVICE**
MEDIENSTROMÜBERTRAGUNGSVERFAHREN UND -VORRICHTUNG
DISPOSITIF ET PROCÉDÉ DE TRANSMISSION DE FLUX MULTIMÉDIA

(30) Priority: 31.08.2012 CN 201210319178
(43) Date of publication of application: 08.07.2015
(73) Proprietor: ZTE Corporation, Shenzhen, Guangdong 518057 (CN)
(72) Inventor: LIAO, Kai, Shenzhen Guangdong 518057 (CN); ZHANG, Wei, Shenzhen Guangdong 518057 (CN); HE, Bin, Shenzhen Guangdong 518057 (CN)
(74) Representative: Mozzi, Matteo
(86) International application number: PCT/CN2013/079930
(87) International publication number: WO 2013/174327

(56) References cited:
- WO-A1-2009/138036
- CN-A- 101 447 893
- CN-A- 101 447 893
- CN-A- 102 131 109
- CN-A- 102 131 109
- CN-A- 102 480 418
- CN-A- 102 647 402
- US-A1- 2009 183 038
- US-A1- 2012 075 406

## Description

### Field of the Invention

The invention relates to the technical field of media transmission, in particular to method and device for a media stream redundant transmission.

### Background of the Invention

In the process of media transmission, two terminals in need of media stream interaction are required to conduct media capability negotiation at first. The media capabilities usually include: media channel Internet Protocol (IP) addresses and port numbers of the terminals, audio and video media, coding types and related parameters. Media channels are established through the media capability negotiation, then the audio and video media data is encoded on the established media channels according to the negotiated audio and video data coding types and the related parameters, and the coded media data is encapsulated and packed for transmission to the opposite terminals.

In the conventional art, the media channels for two communicating parties are usually established by virtue of signaling negotiation, a calling terminal initiates a link establishment request message when media communication is started, and carries the media capabilities of the calling terminal in the request message, and a called terminal conducts the media capability negotiation according to own media capabilities after receiving the link establishment request message from the calling terminal, selects media capabilities for this communication process from the received media capabilities of the calling terminal, and transmits the selected media capabilities to the calling terminal in form of response message to further finish the establishment of the media channels for the two communicating parties.

However, only one media channel is established by the signaling negotiation, thus in the communication process, the problems of packet loss, jitter, link breakage and the like are easily caused by network congestion or various other reasons to influence the quality of audio and video of the two communicating parties. At present, a media stream redundant transmission technology is adopted for solving the problem of packet loss in a media stream transmission process, namely redundant data is carried in a data packet transmission process. The problem of packet loss can be solved by the redundant data carrying-based media stream redundant transmission technology, but the problem of influence caused by jitter, link breakage and the like on the audio and video quality cannot be solved, and the carried redundant data will occupy a bandwidth and more network resources. Therefore, the conventional media stream transmission technology remains to be improved and developed. One example of the invention provides a method for transmitting Document CN101447893 A describes a method for backing up multimedia business, a terminal thereof, and a calling session control server.

Document CN102131109 A describes method, system and device for monitoring stream media broadcast.

Document US2009/183038 A1 describes a method for improving the integrity of communication means.

Document US2012/075406 A1 describes method and system for handling a multi-media call setup request.

Document CN102647402 A describes consultation method for multimedia session, relevant equipment and system.

Document CN102480418 A describes a routing method for realizing video frequency intercommunication for code division multiple access (CDMA).

### Summary of the Invention

In the present disclosure there is provided a method for transmitting a media stream as disclosed in the appended claim 1, and a corresponding device as disclosed in the appended claim 7.

### Brief Description of the Drawings

Fig. 1 is a flowchart of a method for transmitting media stream provided by an example of the invention;
Fig. 2 is a flowchart of establishment of media channels provided by an example of the invention;
Fig. 3 is a diagram of media stream transmission provided by an example of the invention; and
Fig. 4 is a diagram of a device for transmitting media stream provided by an example of the invention.

### Detailed Description of the Embodiments

According to a method for transmitting media stream provided by the invention, media capability negotiation is conducted between a calling terminal and a called terminal, multiple media channels are established between the calling terminal and the called terminal, and during media stream communication, media stream transmission is conducted on a first media channel at first, and when an abnormity appears in the media stream transmission of the first media channel, a current media stream is switched to another media channel for transmission, so that the media communication quality of two communicating parties is ensured.

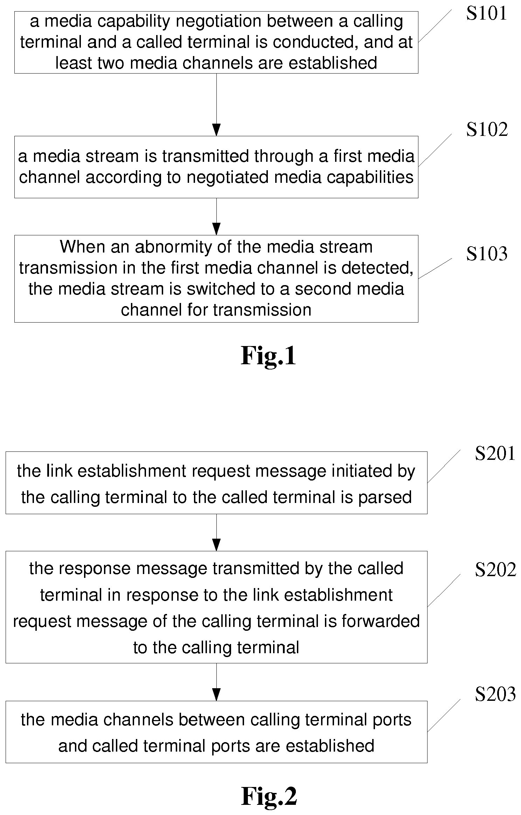

Example 1 of the invention provides a method for transmitting media stream, and the implementation process as is shown in Fig. 1, and the method specifically includes:
S101: a media capability negotiation between a calling terminal and a called terminal is conducted, and at least two media channels are established.

Specifically, when media communication is started, the calling terminal initiates a link establishment request message, and carries media capabilities of the calling terminal in the request message, the called terminal, after receiving the link establishment request message, transmits own media capabilities to the calling terminal in form of response message to finish the media capability negotiation between the calling terminal and the called terminal, and the at least two media channels are established between the calling terminal and the called terminal.

S102: a media stream is transmitted through a first media channel according to negotiated media capabilities.

Specifically, after finishing the media capability negotiation, the calling terminal and the called terminal establish multiple media channels according to own media capabilities, conduct the media stream transmission on the first media channel at first when the media communication is started, detect a transmission condition of a media stream in real time, and when detecting that an abnormity appears in the media stream transmission of the first media channel, then goes to S103.

S103: the media stream is switch to a second media channel for transmission.

Specifically, when the abnormity is detected to appear in the media stream transmission of the first media channel, another media channel is selected from the at least two media channels which are established as a second media channel, and the media stream is switched from the current first media channel to the second media channel which is selected for transmission.

According to the method for transmitting media stream provided by the example of the invention, multiple redundant media channels are established between the calling terminal and the called terminal, and in a media stream communication process, if the abnormity appears in the media stream transmission of a current media channel, one of the other media channels is selected for the transmission of the current media stream, so that reduction in audio and video quality caused by packet loss, jitter, link breakage and/or the like is avoided, the audio and video quality of the two communicating parties is ensured, and the method can be well applied to a place with a higher requirement on communication quality.

Example 2 of the invention further describes the method for transmitting media stream in example 1 with reference to a practical application in detail, and is not intended to limit the method for transmitting media stream.

In the embodiment of the invention, the calling terminal and the called terminal conduct the media capability negotiation to finish the establishment of the media channels and the transmission of the media stream by virtue of a control protocol such as a Real Time Streaming Protocol (RTSP) and a Session Initiation Protocol (SIP), and as shown in Fig. 2, a specific implementation process is as follows:
S201: the link establishment request message initiated by the calling terminal to the called terminal is parsed.

Specifically, the link establishment request message initiated by the calling terminal to the called terminal carries at least two media channel IP addresses and at least two corresponding media channel port numbers of the calling terminal.

Preferably, when the calling terminal initiates the link establishment request message to the called terminal, the media capabilities of the calling terminal can be described by virtue of an SDP, and include the media channel IP addresses and the port numbers of the calling terminal, audio and video media, a coding type, a related parameter and the like. Wherein an attribute row c describes the media channel IP addresses, an attribute row m describes the audio and video port numbers of the media channels, and an attribute row a describes the audio and video coding type and the related parameter.

Specifically, an SDP extension mode is adopted in the example of the invention, the at least two media channel IP addresses and the at least two corresponding media channel port numbers of the calling terminal are carried in the link establishment request message transmitted by the calling terminal according to the SDP. Wherein when the media capabilities of the calling terminal are described by virtue of the SDP, the attribute row c describes multiple IP addresses of the media channels of the calling terminal, such as IPA1, IPA2,···, and the attribute row m describes multiple audio and video port numbers of the media channels, such as PortA1, PortA2, ···; and moreover, sequential numbers of the IP addresses in the attribute row c and the audio and video port numbers in the attribute row m are kept consistent, and each IP address and the corresponding audio and video port number, which have the same sequential number, form a calling terminal port of the calling terminal, such as IPA1:PortA1, IPA2:PortA2, ···.

S202: the response message transmitted by the called terminal in response to the link establishment request message of the calling terminal is forwarded to the calling terminal.

Specifically, the response message transmitted by the called terminal in response to the link establishment request message of the calling terminal carries at least two media channel IP addresses and at least two corresponding media channel port numbers of the called terminal.

Preferably, the media capabilities of the called terminal can be described by virtue of the SDP, and include the media channel IP addresses and the port numbers of the called terminal, audio and video media, a coding type, a related parameter and the like. Wherein an attribute row c describes the media channel IP addresses, an attribute row m describes the audio and video port numbers of the media channels, and an attribute row a describes the audio and video coding type and the related parameter.

Specifically, an SDP extension mode is adopted in the example of the invention, the at least two media channel IP addresses and the at least two corresponding media channel port numbers of the called terminal are carried in the response message transmitted by the called terminal in response to the link establishment request message according to the SDP. Wherein when the media capabilities of the called terminal are described by virtue of the SDP, the attribute row c describes multiple IP addresses of the media channels of the called terminal, such as IPB1, IPB2, ···, and the attribute row m describes multiple audio and video port numbers of the media channels, such as PortB1, PortB2, ···; and moreover, sequential numbers of the IP addresses in the attribute row c and the audio and video port numbers in the attribute row m are kept consistent, and each IP address and the corresponding audio and video port number, which have the same sequential number, form a called terminal port of the called terminal, such as IPB1:PortB1, IPB2:PortB2, ···.

S203: the media channels between the calling terminal ports and the called terminal ports are established.

Specifically, after receiving and responding to the link establishment request message of the calling terminal, the called terminal establishes the media channels between the calling terminal ports corresponding to the media channel port numbers of the calling terminal and the called terminal ports corresponding to the media channel port numbers of the called terminal according to own media capabilities in combination with the media capabilities of the calling terminal.

Preferably, when describing own media capabilities by virtue of the SDP, the calling terminal and the called terminal, after finishing the media capability negotiation, establish multiple media channels on physical links, such as IPA1:PortA1-IPB1:PortB1, IPA2:PortA2-IPB2:PortB2, ···. After the multiple media channels are established, the calling terminal and the called terminal select the audio and video media, the coding types and the related parameters, which are adopted in this communication process, code own audio and video data respectively, encapsulate the audio and video data into Real-time Transport Protocol (RTP) data by adopting a Spanning Tree Protocol (STP), and transmit the RTP data to the opposite terminals through the first media channels which are selected to start media stream communication.

Furthermore, when the media stream communication is started, the first media channel is selected from the multiple redundant media channels which are established for the transmission of the media stream, a transmission condition of the media stream in the first media channel is detected in real time in a media stream transmission process, and when the abnormity is detected to appear in the media stream transmission of the first media channel, the media stream is switched to the second media channel different from the first media channel for transmission.

Preferably, a transmission condition of a media stream of the calling terminal can be detected for judgment in the transmission condition of the media stream, which is specifically implemented as follows:
a packet loss rate and/or a jitter value of the media stream received by the calling terminal is analyzed; and when the packet loss rate and/or the jitter value exceeds a preset threshold value, the abnormity in the media stream transmission in the first media channel corresponding to the first calling terminal port of the calling terminal is determined, and the calling terminal is notified to switch the media stream from the first media channel corresponding to the first calling terminal port of the calling terminal to the second media channel corresponding to a second calling terminal port for transmission. For example, if finding that the media channel corresponding to IPA1:PortA1 is abnormal, the calling terminal transmits media data to the called terminal through IPA2:PortA2.

Specifically, in a media stream communication process, after receiving an RTP data packet, the calling terminal analyzes a packet loss rate, a jitter value and the like of the RTP data packet, and if finding that the packet loss rate and the jitter value of the RTP data packet exceed preset threshold values, can determine that the abnormity appears in the media stream transmission in the first media channel corresponding to the current port.

Preferably, the abnormity in the media stream transmission in the first media channel may be caused by the ports, and may also be caused by a network cause, and when the abnormity in the media stream transmission is caused by the ports, the calling terminal can select the second media channel corresponding to the second port which is located in the same network environment with the first port in a current network environment for the transmission of the media stream, and the called terminal port of the second media channel can be or not be that of the first media channel. For example, if the abnormity in the current media stream transmission is caused by the port IPA1:PortA1, there are media channels established between IPA2:PortA2 and each of the IPB1:PortB1 and IPB2:PortB2, and the calling terminal can select IPA2:PortA2-IPB1:PortB1 as well as IPA2:PortA2-IPB2:PortB2 for the transmission of the media data.

Preferably, when the abnormity in the media stream transmission in the first media channel is caused by the network cause, in order to avoid the influence of the current network on media communication quality, the two media channels involved in the switching of the calling terminal are located in different networks, and each calling terminal port establishes a unique media channel with the corresponding called terminal port, namely the first media channel corresponding to the first calling terminal and the second media channel corresponding to the second calling terminal port are located in different networks, the first calling terminal port establishes only one media channel with the first called terminal port, the first called terminal port establishes only one media channel with the first calling terminal port, and so do the second calling terminal port and the second called terminal port. For example, if the abnormity in the current media stream transmission is caused by the network cause, the calling terminal can only select IPA2:PortA2-IPB2:PortB2 located in a network different from a network where current IPA1:PortA1-IPB1:PortB1 is located for the transmission of the media data.

Preferably, a transmission condition of a media stream of the called terminal can also be detected for judgment in the transmission condition of the media stream, which is specifically implemented as follows:
the packet loss rate and/or the jitter value of the media stream received by the called terminal is analyzed; and when the packet loss rate and/or the jitter value exceeds a preset threshold value), the abnormity in the media stream transmission in the first media channel corresponding to the first called terminal port of the called terminal is determined, and the called terminal is notified to switch the media stream from the first media channel corresponding to the first called terminal port of the called terminal to the second media channel corresponding to a second called terminal port for transmission. For example, if finding that the media channel corresponding to IPB1:PortB1 is abnormal, the called terminal transmits media data to the calling terminal through IPB2:PortB2.

Specifically, in the media stream communication process, after receiving an RTP data packet, the called terminal analyzes a packet loss rate, a jitter value and the like of the RTP data packet, and if finding that the packet loss rate and the jitter value of the RTP data packet exceed preset threshold values, can determine that the abnormity appears in the media stream transmission in the first media channel corresponding to the current port.

Preferably, the abnormity in the media stream transmission in the first media channel may be caused by the ports, and may also be caused by a network cause, and when the abnormity in the media stream transmission is caused by the called terminal ports, the called terminal can select the second media channel corresponding to the second port which is located in the same network environment with the first port in a current network environment for the transmission of the media stream, and the called terminal port of the second media channel can be or not be the calling terminal port of the first media channel. For example, if the abnormity in the current media stream transmission is caused by port IPB1:PortB1, there are media channels established between IPB2:PortB2 and each of IPA1:PortA1 and IPA2:PortA2, and the called terminal can select IPB2:PortB2-IPA1:PortA1 as well as IPB2:PortB2-IPA2:PortA2 for the transmission of the media data.

Preferably, when the abnormity in the media stream transmission in the first media channel is caused by the network cause, in order to avoid the influence of the current network on media communication quality, the two media channels involved in the switching of the called terminal should be located in different networks, and each called terminal port establishes a unique media channel with the corresponding calling terminal port, namely the first media channel corresponding to the first called terminal port and the second media channel corresponding to the second called terminal port are located in different networks, the first called terminal port establishes only one media channel with the first calling terminal port, the first calling terminal port establishes only one media channel with the first called terminal port, and so do the second calling terminal port and the second called terminal port. For example, if the abnormity in the current media stream transmission is caused by the network cause, the called terminal can only select IPB2:PortB2-IPA2:PortA2 located in a network different from a network where current IPB1:PortB1-IPA1:PortA1 is located for the transmission of the media data.

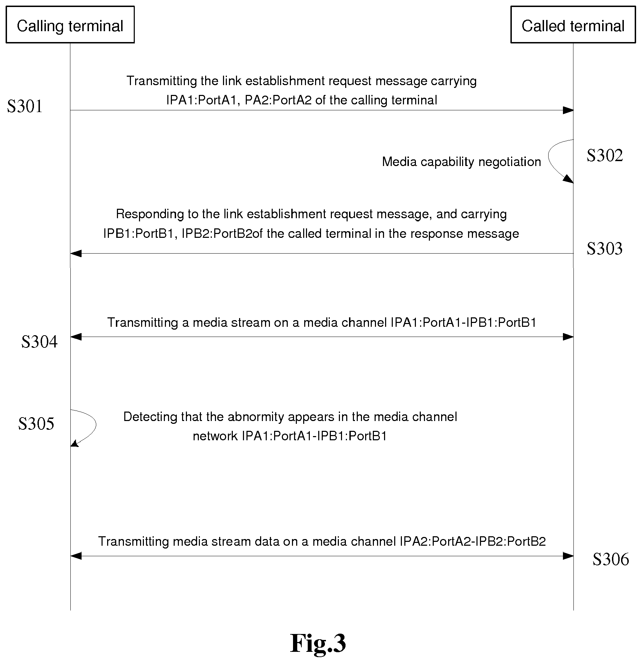

As shown in Fig. 3, the media stream transmission provided by the example of the invention includes:
S301: the calling terminal transmits a link establishment request which carries the media capabilities of the calling terminal to the called terminal, and the media capabilities include: IPA1:PortA1, IPA2:PortA2,···.
S302: the calling terminal and the called terminal conduct the media capability negotiation.
S303: the called terminal responds to the link establishment request, and carries the media capabilities of the called terminal in the response message, the media capabilities include: IPB1:PortB1, IPB2:PortB2, ···.
S304: the media stream transmission is performed on the media channel IPA1:PortA1-IPB1:PortB1.
S305: the abnormity of the media channel IPA1:PortA-IPB1:PortB1 is detected.
S306: media stream data is transmitted on the media channel IPA2:PortA2-IPB2: PortB2.

According to the method for transmitting media stream provided by the invention, multiple redundant media channels are established between the calling terminal and the called terminal, and in the media stream communication process, if the abnormity in the media stream transmission of the first media channel, the media stream is switched to the second media channel different from the first media channel for transmission, so that the problem of reduction in audio and video quality caused by packet loss, jitter, link breakage and/or the like is solved, the audio and video quality of the two communicating parties is ensured, and the method can be well applied to a place with a higher requirement on communication quality.

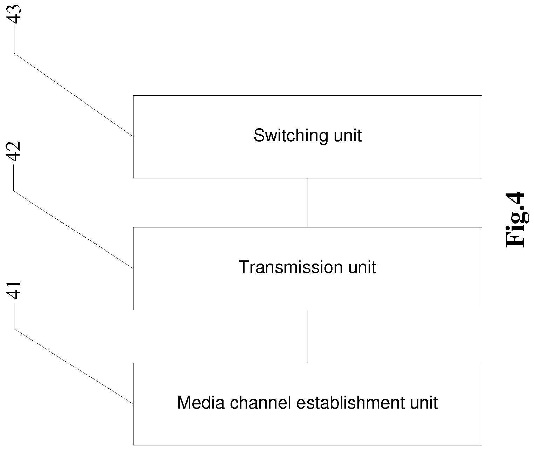

Example 3 of the invention provides a device for transmitting media stream, and the block diagram of the device is as shown in Fig. 4, the device includes:
a media channel establishment unit 41, configured to conduct media capability negotiation between a calling terminal and a called terminal according to a link establishment request message transmitted by the calling terminal and a response message transmitted by the called terminal in response to the link establishment request message, and establish at least two media channels;
a transmission unit 42, configured to conduct media stream transmission through a first media channel according to negotiated media capabilities; and
a switching unit 43, configured to, when detecting that an abnormity appears in the media stream transmission of the first media channel, select another one of the at least two media channels as a second media channel, and switch the media stream from the first media channel to the second media channel for transmission.

Wherein the media channel establishment unit 41 is specifically configured to:
parse the link establishment request message initiated by the calling terminal to the called terminal, wherein the link establishment request message carries at least two media channel IP addresses and at least two corresponding media channel port numbers of the calling terminal;
forward the response message transmitted by the called terminal in response to the link establishment request message to the calling terminal, wherein the response message carries at least two media channel IP addresses and at least two corresponding media channel port numbers of the called terminal; and
establish the media channels between calling terminal ports corresponding to the media channel port numbers of the calling terminal and called terminal ports corresponding to the media channel port numbers of the called terminal.

Preferably, the media channel establishment unit 41 is further configured to:
carry the at least two media channel IP addresses and the at least two corresponding media channel port numbers of the calling terminal in the link establishment request message transmitted by the calling terminal according to an SDP; and/or
carry the at least two media channel IP addresses and the at least two corresponding media channel port numbers of the called terminal in the response message transmitted by the called terminal in response to the link establishment request message according to the SDP.

Preferably, the switching unit 43 is configured to:
analyze a packet loss rate and/or a jitter value of a media stream received by the calling terminal; and
when the packet loss rate and/or the jitter value exceeds a preset threshold value, determine that an abnormity appears in the media stream transmission in a first media channel corresponding to a first calling terminal port of the calling terminal, and notify the calling terminal to switch the media stream from the first media channel corresponding to the first calling terminal port of the calling terminal to a second media channel corresponding to a second calling terminal port for transmission.

Preferably, the first media channel corresponding to the first calling terminal port and the second media channel corresponding to the second calling terminal port are located in different networks, the first calling terminal port establishes only one media channel with a first called terminal port, and the first called terminal port establishes only one media channel with the first calling terminal port.

Preferably, the switching unit 43 is configured to:
analyze a data packet rate and/or a jitter value of a media stream received by the called terminal; and
when the packet loss rate and/or the jitter value exceeds a preset threshold value, determine that an abnormity in the media stream transmission in a first media channel corresponding to the first called terminal port of the called terminal, and notify the called terminal to switch the media stream from the first media channel corresponding to the first called terminal port of the called terminal to a second media channel corresponding to a second called terminal port for transmission.

Wherein the first media channel corresponding to the first called terminal port and the second media channel corresponding to the second called terminal port are located in different networks, the first called terminal port establishes only one media channel with the first calling terminal port, and the first calling terminal port establishes only one media channel with the first called terminal port.

According to the device for transmitting media stream provided by the example of the invention, multiple redundant media channels are established between the calling terminal and the called terminal, and in a media stream communication process, if the abnormity is detected to appear in the media stream transmission of the first media channel, the media stream is switched to the second media channel different from the first media channel for transmission, so that the problem of reduction in audio and video quality caused by packet loss, jitter, link breakage and/or the like is solved, the audio and video quality of the two communicating parties is ensured, and the device can be well applied to a place with a higher requirement on communication quality.

## Claims

1. A method for transmitting media stream, comprising:
conducting media capability negotiation between a calling terminal and a called terminal according to a link establishment request message transmitted by the calling terminal and a response message transmitted by the called terminal in response to the link establishment request message, and establishing at least two media channels between the calling terminal and the called terminal (S101);
transmitting a media stream through a first media channel according to negotiated media capabilities (S102); and
when an abnormity of the media stream transmission in the first media channel is detected, selecting another one of the at least two media channels as a second media channel, and switching the media stream from the first media channel to the second media channel for transmission (S103), wherein the first media channel and the second media channel are located in different networks;
wherein conducting the media capability negotiation between the calling terminal and the called terminal according to the link establishment request message transmitted by the calling terminal and the response message transmitted by the called terminal in response to the link establishment request message, and establishing the at least two media channels comprises:
parsing the link establishment request message initiated by the calling terminal to the called terminal, wherein at least two media channel Internet Protocol, IP, addresses and at least two corresponding media channel port numbers of the calling terminal are carried in the link establishment request message (S201);
forwarding the response message transmitted by the called terminal in response to the link establishment request message to the calling terminal, wherein at least two media channel IP addresses and at least two corresponding media channel port numbers of the called terminal are carried in the response message (S202); and
establishing the media channels between the calling terminal ports corresponding to the media channel port numbers of the calling terminal and the called terminal ports corresponding to the media channel port numbers of the called terminal (S203).

2. The method according to claim 1, wherein the at least two media channel IP addresses and the at least two corresponding media channel port numbers of the calling terminal are carried in the link establishment request message transmitted by the calling terminal according to a Session Description Protocol ,SDP; or the at least two media channel IP addresses and the at least two corresponding media channel port numbers of the called terminal are carried in the response message transmitted by the called terminal in response to the link establishment request message according to the SDP.

3. The method according to claim 1, wherein when the abnormity of the media stream transmission in the first media channel is detected, selecting another one of the at least two media channels as the second media channel, and switching the media stream from the first media channel to the second media channel for transmission comprises:
analyzing a packet loss rate or a jitter value of the media stream received by the calling terminal; and
when the packet loss rate or the jitter value exceed preset threshold values, determining that an abnormity appears in the media stream transmission in the first media channel corresponding to the first calling terminal port of the calling terminal, and notifying the calling terminal to switch the media stream from the first media channel corresponding to the first calling terminal port of the calling terminal to the second media channel corresponding to a second calling terminal port for transmission.

4. The method according to claim 3, wherein the first media channel corresponding to the first calling terminal port and the second media channel corresponding to the second calling terminal port are located in different networks, the first calling terminal port establishes only one media channel with a first called terminal port, and the first called terminal port establishes only one media channel with the first calling terminal port.

5. The method according to claim 1, wherein when the abnormity is detected to appear in the media stream transmission of the first media channel, selecting another one of the at least two media channels as the second media channel, and switching the media stream from the first media channel to the second media channel for transmission comprises:
analyzing a data packet rate or a jitter value of the media stream received by the called terminal; and
when the packet loss rate or the jitter value exceed preset threshold values, determining that an abnormity appears in the media stream transmission in the first media channel corresponding to the first called terminal port of the called terminal, and notifying the called terminal to switch the media stream from the first media channel corresponding to the first called terminal port of the called terminal to the second media channel corresponding to a second called terminal port for transmission.

6. The method according to claim 5, wherein the first media channel corresponding to the first called terminal port and the second media channel corresponding to the second called terminal port are located in different networks, the first called terminal port establishes only one media channel with the first calling terminal port, and the first calling terminal port establishes only one media channel with the first called terminal port.

7. A device adapted to transmit media stream, comprising:
a media channel establishment unit (41), configured to conduct media capability negotiation between a calling terminal and a called terminal according to a link establishment request message transmitted by the calling terminal and a response message transmitted by the called terminal in response to the link establishment request message, and establish at least two media channels between the calling terminal and the called terminal;
a transmission unit (42), configured to transmit a media stream through a first media channel according to negotiated media capabilities; and
a switching unit (43), configured to, when an abnormity of the media stream transmission in the first media channel is detected, select another one of the at least two media channels as a second media channel, and switch a media stream from the first media channel to the second media channel for transmission, wherein the first media channel and the second media channel are located in different networks;
wherein the media channel establishment unit is further configured to:
parse the link establishment request message initiated by the calling terminal to the called terminal, wherein the link establishment request message carries at least two media channel Internet Protocol, IP, addresses and at least two corresponding media channel port numbers of the calling terminal;
forward the response message transmitted by the called terminal in response to the link establishment request message to the calling terminal, wherein the response message carries at least two media channel IP addresses and at least two corresponding media channel port numbers of the called terminal; and
establish the media channels between calling terminal ports corresponding to the media channel port numbers of the calling terminal and called terminal ports corresponding to the media channel port numbers of the called terminal.

8. The device according to claim 7, wherein the media channel establishment unit is further configured to:
carry the at least two media channel IP addresses and the at least two corresponding media channel port numbers of the calling terminal in the link establishment request message transmitted by the calling terminal according to a Session Description Protocol, SDP; or carry the at least two media channel IP addresses and the at least two corresponding media channel port numbers of the called terminal in the response message transmitted by the called terminal in response to the link establishment request message according to the SDP.

9. The device according to claim 7, wherein the switching unit is further configured to:
analyze a packet loss rate or a jitter value of the media stream received by the calling terminal; and
when the packet loss rate or the jitter value exceed preset threshold values, determine that an abnormity appears in the media stream transmission in a first media channel corresponding to a first calling terminal port of the calling terminal, and notify the calling terminal to switch the media stream from the first media channel corresponding to the first calling terminal port of the calling terminal to a second media channel corresponding to a second calling terminal port for transmission.

10. The device according to claim 9, wherein the first media channel corresponding to the first calling terminal port and the second media channel corresponding to the second calling terminal port are located in different networks, the first calling terminal port establishes only one media channel with a first called terminal port, and the first called terminal port establishes only one media channel with the first calling terminal port.

11. The device according to claim 7, wherein the switching unit is configured to:
analyze a data packet rate or a jitter value of the media stream received by the called terminal; and
when the packet loss rate or the jitter value exceed preset threshold values, determine that an abnormity in the media stream transmission in a first media channel corresponding to the first called terminal port of the called terminal, and notify the called terminal to switch the media stream from the first media channel corresponding to the first called terminal port of the called terminal to a second media channel corresponding to a second called terminal port for transmission.

12. The device according to claim 11, wherein the first media channel corresponding to the first called terminal port and the second media channel corresponding to the second called terminal port are located in different networks, the first called terminal port establishes only one media channel with the first calling terminal port, and the first calling terminal port establishes only one media channel with the first called terminal port.

## Patentansprüche

1. Verfahren zum Übertragen eines Medienstroms umfassend:
Durchführen von Medienfähigkeitsverhandlungen zwischen einem rufenden Endgerät und einem gerufenen Endgerät gemäß einer Verbindungsausbildungsanforderungsnachricht, welche durch das rufende Endgerät übertragen wird, und einer Antwortnachricht, welche durch das gerufene Endgerät als Antwort auf die Verbindungsausbildungsanforderungsnachricht übertragen wird, und Ausbilden von mindestens zwei Medienkanälen zwischen dem rufenden Endgerät und dem gerufenen Endgerät (S101);
Übertragen eines Medienstroms durch einen ersten Medienkanal gemäß den verhandelten Medienfähigkeiten (S102); und
wenn eine Anomalie der Medienstrom-Übertragung in dem ersten Medienkanal detektiert wird, Auswählen eines anderen aus den mindestens zwei Medienkanälen als einen zweiten Medienkanal, und Schalten des Medienstroms von dem ersten Medienkanal zu dem zweiten Medienkanal für eine Übertragung (S103), wobei der erste Medienkanal und der zweite Medienkanal in unterschiedlichen Netzwerken vorliegen;
wobei Durchführen der Medienfähigkeitsverhandlungen zwischen dem rufenden Endgerät und dem gerufenen Endgerät gemäß der Verbindungsausbildungsanforderungsnachricht, welche durch das rufende Endgerät übertragen wird und der Antwortnachricht, welche durch das gerufene Endgerät als Antwort auf die Verbindungsausbildungsanforderungsnachricht übertragen wird, und Ausbilden von den mindestens zwei Medienkanälen umfasst:
Parsen der Verbindungsausbildungsanforderungsnachricht, welche durch das rufende Endgerät initiiert worden ist, zu dem gerufenen Endgerät, wobei mindestens zwei Medienkanal Internetprotokoll-, IP,-Adressen und mindestens zwei korrespondierende Medienkanal-Portnummern des rufenden Endgeräts von der Verbindungsausbildungsanforderungsnachricht getragen werden (S201);
Weiterleiten der Antwortnachricht, welche durch das gerufene Endgerät als Antwort auf die Verbindungsausbildungsanforderungsnachricht übertragen wird, zu dem rufenden Endgerät, wobei mindestens zwei Medienkanal-IP-Adressen und mindestens zwei korrespondierende Medienkanal-Portnummern des gerufenen Endgeräts von der Antwortnachricht getragen werden (S202); und
Ausbilden der Mediakanäle zwischen den Ports eines rufenden Endgeräts, welche den Medienkanal-Portnummern des rufenden Endgeräts entsprechen, und den Ports eines gerufenen Endgeräts, welche den Medienkanal-Portnummern des gerufenen Endgeräts entsprechen (S203).

2. Verfahren nach Anspruch 1, wobei die mindestens zwei Medienkanal-IP-Adressen und die mindestens zwei korrespondierenden Medienkanal-Portnummern des rufenden Endgeräts von der Verbindungsausbildungsanforderungsnachricht getragen werden, welche durch das rufende Endgerät gemäß einem Session Description Protocol, SDP, übertragen wird; oder
die mindestens zwei Medienkanal-IP-Adressen und die mindestens zwei korrespondierenden Medienkanal-Portnummern des gerufenen Endgeräts von der Antwortnachricht getragen werden, welche durch das gerufene Endgerät als Antwort auf die Verbindungsausbildungsanforderungsnachricht gemäß dem SDP übertragen wird.

3. Verfahren nach Anspruch 1, wobei, wenn die Anomalie der Medienstrom-Übertragung in dem ersten Medienkanal detektiert wird, Auswählen eines anderen aus den mindestens zwei Medienkanälen als den zweiten Medienkanal, und Schalten des Medienstroms von dem ersten Medienkanal zu dem zweiten Medienkanal für eine Übertragung umfasst:
Analysieren einer Paketverlustrate oder
eines Schwankungswerts des Medienstroms, welcher durch das rufende Endgerät empfangen wird; und
wenn die Paketverlustrate oder
der Schwankungswert voreingestellte Schwellenwerte übersteigen, Bestimmen, dass eine Anomalie in der Medienstrom-Übertragung in dem ersten Medienkanal auftritt, welcher dem ersten Port eines rufenden Endgeräts des rufenden Endgeräts entspricht, und Benachrichtigen des rufenden Endgeräts, um den Medienstrom von dem ersten Medienkanal, welcher dem ersten Port eines rufenden Endgeräts des rufenden Endgeräts entspricht, zu dem zweiten Medienkanal, welcher einem zweiten Port eines rufenden Endgeräts entspricht, für eine Übertragung zu schalten.

4. Verfahren nach Anspruch 3, wobei der erste Medienkanal, welcher dem ersten Port eines rufenden Endgeräts entspricht, und der zweite Medienkanal, welcher dem zweiten Port eines rufenden Endgeräts entspricht, in unterschiedlichen Netzwerken vorliegen, wobei der erste Port eines rufenden Endgeräts nur einen Medienkanal mit einem ersten Port eines gerufenen Endgeräts ausbildet und der erste Port eines gerufenen Endgeräts nur einen Medienkanal mit dem ersten Port eines rufenden Endgeräts ausbildet.

5. Verfahren nach Anspruch 1, wobei, wenn detektiert wird, dass die Anomalie in der Medienstrom-Übertragung des ersten Medienkanals auftritt, Auswählen eines anderen aus den mindestens zwei Medienkanälen als den zweiten Medienkanal, und Schalten des Medienstroms von dem ersten Medienkanal zu dem zweiten Medienkanal für eine Übertragung umfasst:
Analysieren einer Datenpaketrate oder
eines Schwankungswerts des Medienstroms, welcher durch das gerufene Endgerät empfangen wird; und
wenn die Paketverlustrate oder
der Schwankungswert voreingestellte Schwellenwerte übersteigen,
Bestimmen, dass eine Anomalie in der Medienstrom-Übertragung in dem ersten Medienkanal auftritt, welcher dem ersten Port eines gerufenen Endgeräts des gerufenen Endgeräts entspricht, und Benachrichtigen des gerufenen Endgeräts, um den Medienstrom von dem ersten Medienkanal, welcher dem ersten Port eines gerufenen Endgeräts des gerufenen Endgeräts entspricht, zu dem zweiten Medienkanal, welcher einem zweiten Port eines gerufenen Endgeräts entspricht, für eine Übertragung zu schalten.

6. Verfahren nach Anspruch 5, wobei der erste Medienkanal, welcher dem ersten Port eines gerufenen Endgeräts entspricht, und der zweite Medienkanal, welcher dem zweiten Port eines gerufenen Endgeräts entspricht, in unterschiedlichen Netzwerken vorliegen, wobei der erste Port eines gerufenen Endgeräts nur einen Medienkanal mit dem ersten Port eines rufenden Endgeräts ausbildet und der erste Port eines rufenden Endgeräts nur einen Medienkanal mit dem ersten Port eines gerufenen Endgeräts ausbildet.

7. Vorrichtung, welche dafür eingerichtet ist, einen Medienstrom zu übertragen, umfassend:
eine Medienkanal-Ausbildungseinheit (41), welche konfiguriert ist, um Medienfähigkeitsverhandlungen zwischen einem rufenden Endgerät und einem gerufenen Endgerät gemäß einer Verbindungsausbildungsanforderungsnachricht, welche durch das rufende Endgerät übertragen wird, und einer Antwortnachricht, welche durch das gerufene Endgerät als Antwort auf die Verbindungsausbildungsanforderungsnachricht übertragen wird, durchzuführen und um mindestens zwei Medienkanäle zwischen dem rufenden Endgerät und dem gerufenen Endgerät auszubilden;
eine Übertragungseinheit (42), welche konfiguriert ist, um einen Medienstrom durch einen ersten Medienkanal gemäß den verhandelten Medienfähigkeiten zu übertragen; und
eine Schalteinheit (43), welche konfiguriert ist, wenn eine Anomalie der Medienstrom-Übertragung in dem ersten Medienkanal detektiert wird, um einen anderen aus den mindestens zwei Medienkanälen als einen zweiten Medienkanal auszuwählen, und um einen Medienstrom von dem ersten Medienkanal zu dem zweiten Medienkanal für eine Übertragung zu schalten, wobei der erste Medienkanal und der zweite Medienkanal in unterschiedlichen Netzwerken vorliegen;
wobei die Medienkanal-Ausbildungseinheit ferner konfiguriert ist, um:
die Verbindungsausbildungsanforderungsnachricht, welche durch das rufende Endgerät initiiert worden ist, zu dem gerufenen Endgerät zu parsen, wobei die Verbindungsausbildungsanforderungsnachricht mindestens zwei Medienkanal-Internetprotokoll-, IP,- Adressen und mindestens zwei korrespondierende Medienkanal-Portnummern des rufenden Endgeräts trägt;
die Antwortnachricht, welche durch das gerufene Endgerät als Antwort auf die Verbindungsausbildungsanforderungsnachricht übertragen wird, zu dem rufenden Endgerät weiterzuleiten, wobei die Antwortnachricht mindestens zwei Medienkanal-IP-Adressen und mindestens zwei korrespondierende Medienkanal-Portnummern des gerufenen Endgeräts trägt; und
die Mediakanäle zwischen Ports eines rufenden Endgeräts, welche den Medienkanal-Portnummern des rufenden Endgeräts entsprechen, und Ports eines gerufenen Endgeräts, welche den Medienkanal-Portnummern des gerufenen Endgeräts entsprechen, auszubilden.

8. Vorrichtung nach Anspruch 7, wobei die Medienkanal-Ausbildungseinheit ferner konfiguriert ist, um:
die mindestens zwei Medienkanal-IP-Adressen und die mindestens zwei korrespondierenden Medienkanal-Portnummern des rufenden Endgeräts in der Verbindungsausbildungsanforderungsnachricht zu tragen, welche durch das rufende Endgerät gemäß einem Session Description Protocol, SDP, übertragen wird; oder
die mindestens zwei Medienkanal-IP-Adressen und die mindestens zwei korrespondierenden Medienkanal-Portnummern des gerufenen Endgeräts in der Antwortnachricht zu tragen, welche durch das gerufene Endgerät als Antwort auf die Verbindungsausbildungsanforderungsnachricht gemäß dem SDP übertragen wird.

9. Vorrichtung nach Anspruch 7, wobei die Schalteinheit ferner konfiguriert ist, um:
eine Paketverlustrate oder
einen Schwankungswert des Medienstroms, welcher durch das rufende Endgerät empfangen wird, zu analysieren; und
wenn die Paketverlustrate oder
der Schwankungswert voreingestellte Schwellenwerte übersteigen,
zu bestimmen, dass eine Anomalie in der Medienstrom-Übertragung in einem ersten Medienkanal auftritt, welcher einem ersten Port eines rufenden Endgeräts des rufenden Endgeräts entspricht, und um das rufende Endgerät zu benachrichtigen, um den Medienstrom von dem ersten Medienkanal, welcher dem ersten Port eines rufenden Endgeräts des rufenden Endgeräts entspricht, zu einem zweiten Medienkanal, welcher einem zweiten Port eines rufenden Endgeräts entspricht, für eine Übertragung zu schalten.

10. Vorrichtung nach Anspruch 9, wobei der erste Medienkanal, welcher dem ersten Port eines rufenden Endgeräts entspricht, und der zweite Medienkanal, welcher dem zweiten Port eines rufenden Endgeräts entspricht, in unterschiedlichen Netzwerken vorliegen, wobei der erste Port eines rufenden Endgeräts nur einen Medienkanal mit einem ersten Port eines gerufenen Endgeräts ausbildet und der erste Port eines gerufenen Endgeräts nur einen Medienkanal mit dem ersten Port eines rufenden Endgeräts ausbildet.

11. Vorrichtung nach Anspruch 7, wobei die Schalteinheit ferner konfiguriert ist, um:
eine Datenpaketrate oder
einen Schwankungswert des Medienstroms, welcher durch das gerufene Endgerät empfangen wird, zu analysieren; und
wenn die Paketverlustrate oder
der Schwankungswert voreingestellte Schwellenwerte übersteigen,
zu bestimmen, dass eine Anomalie in der Medienstrom-Übertragung in einem ersten Medienkanal auftritt, welcher dem ersten Port eines gerufenen Endgeräts des gerufenen Endgeräts entspricht, und um das gerufene Endgerät zu benachrichtigen, um den Medienstrom von dem ersten Medienkanal, welcher dem ersten Port eines gerufenen Endgeräts des gerufenen Endgeräts entspricht, zu einem zweiten Medienkanal, welcher einem zweiten Port eines gerufenen Endgeräts entspricht, für eine Übertragung zu schalten.

12. Vorrichtung nach Anspruch 11, wobei der erste Medienkanal, welcher dem ersten Port eines gerufenen Endgeräts entspricht, und der zweite Medienkanal, welcher dem zweiten Port eines gerufenen Endgeräts entspricht, in unterschiedlichen Netzwerken vorliegen, wobei der erste Port eines gerufenen Endgeräts nur einen Medienkanal mit dem ersten Port eines rufenden Endgeräts ausbildet und der erste Port eines rufenden Endgeräts nur einen Medienkanal mit dem ersten Port eines gerufenen Endgeräts ausbildet.

## Revendications

1. Procédé de transmission de flux multimédia, comprenant :
la conduite d'une négociation de capacité multimédia entre un terminal appelant et un terminal appelé en fonction d'un message de demande d'établissement de liaison transmis par le terminal appelant et d'un message de réponse transmis par le terminal appelé en réponse au message de demande d'établissement de liaison, et l'établissement d'au moins deux canaux multimédias entre le terminal appelant et le terminal appelé (S101) ;
la transmission d'un flux multimédia par le biais d'un premier canal multimédia en fonction de capacités multimédias négociées (S102) ; et
quand une anomalie de la transmission de flux multimédia dans le premier canal multimédia est détectée, la sélection d'un autre des au moins deux canaux multimédias comme un second canal multimédia et la commutation du flux multimédia du premier canal multimédia au second canal multimédia pour la transmission (S103), dans lequel le premier canal multimédia et le second canal multimédia sont situés dans des réseaux différents ;
dans lequel la conduite d'une négociation de capacité multimédia entre le terminal appelant et le terminal appelé en fonction du message de demande d'établissement de liaison transmis par le terminal appelant et du message de réponse transmis par le terminal appelé en réponse au message de demande d'établissement de liaison et l'établissement des au moins deux canaux multimédias comprennent :
l'analyse syntaxique du message de demande d'établissement de liaison transmis par le terminal appelant au terminal appelé, dans lequel au moins deux adresses de protocole Internet, IP, de canal multimédia et au moins deux numéros de port de canal multimédia correspondants du terminal appelant sont transportés dans le message de demande d'établissement de liaison (S201) ;
le renvoi du message de réponse transmis par le terminal appelé en réponse au message de demande d'établissement de liaison au terminal appelant, dans lequel au moins deux adresses IP de canal multimédia et moins deux numéros de port de canal multimédia correspondants du terminal appelé sont transportés dans le message de réponse (S202) ; et
l'établissement des canaux multimédias entre les ports de terminal appelant correspondant aux numéros de port de canal multimédia du terminal appelant et les ports de terminal appelé correspondant aux numéros de port de canal multimédia du terminal appelé (S203).

2. Procédé selon la revendication 1, dans lequel les au moins deux adresses IP de canal multimédia et les au moins deux numéros de port de canal multimédia correspondants du terminal appelant sont transportés dans le message de demande d'établissement de liaison transmis par le terminal appelant selon un protocole de description de session, SDP ; ou
les au moins deux adresses IP de canal multimédia et les au moins deux numéros de port de canal multimédia correspondants du terminal appelé sont transportés dans le message de réponse transmis par le terminal appelé en réponse au message de demande d'établissement de liaison selon le SDP.

3. Procédé selon la revendication 1, dans lequel quand l'anomalie de la transmission de flux multimédia dans le premier canal multimédia est détectée, la sélection d'un autre des au moins deux canaux multimédias comme le second canal multimédia et la commutation du flux multimédia du premier canal multimédia au second canal multimédia pour la transmission comprennent :
l'analyse d'un taux de perte de paquets ou d'une valeur de gigue du flux multimédia reçu par le terminal appelant ; et
quand le taux de perte de paquets ou la valeur de gigue dépasse des valeurs de seuil prédéfinies, la détermination du fait qu'une anomalie survient dans la transmission de flux multimédia dans le premier canal multimédia correspondant au premier port de terminal appelant du terminal appelant, et la notification au terminal appelant de commuter le flux multimédia du premier canal multimédia correspondant au premier port de terminal appelant du terminal appelant au second canal multimédia correspondant à un second port de terminal appelant pour la transmission.

4. Procédé selon la revendication 3, dans lequel le premier canal multimédia correspondant au premier port de terminal appelant et le second canal multimédia correspondant au second port de terminal appelant sont situés dans des réseaux différents, le premier port de terminal appelant établit un seul canal multimédia avec un premier port de terminal appelé et le premier port de terminal appelé établit un seul canal multimédia avec le premier port de terminal appelant.

5. Procédé selon la revendication 1, dans lequel quand l'anomalie est détectée comme survenant dans la transmission de flux multimédia du premier canal multimédia, la sélection d'un autre des au moins deux canaux multimédias comme le second canal multimédia et la commutation du flux multimédia du premier canal multimédia au second canal multimédia pour la transmission comprennent :
l'analyse d'un débit de paquets de données ou d'une valeur de gigue du flux multimédia reçu par le terminal appelé ; et
quand le taux de perte de paquets ou la valeur de gigue dépasse des valeurs de seuil prédéfinies, la détermination du fait qu'une anomalie survient dans la transmission de flux multimédia dans le premier canal multimédia correspondant au premier port de terminal appelé du terminal appelé, et la notification au terminal appelé de commuter le flux multimédia du premier canal multimédia correspondant au premier port de terminal appelé du terminal appelé au second canal multimédia correspondant à un second port de terminal appelé pour la transmission.

6. Procédé selon la revendication 5, dans lequel le premier canal multimédia correspondant au premier port de terminal appelé et le second canal multimédia correspondant au second port de terminal appelé sont situés dans des réseaux différents, le premier port de terminal appelé établit un seul canal multimédia avec le premier port de terminal appelant et le premier port de terminal appelant établit un seul canal multimédia avec le premier port de terminal appelé.

7. Dispositif adapté pour transmettre un flux multimédia, comprenant :
une unité d'établissement de canal multimédia (41), configurée pour conduire une négociation de capacité multimédia entre un terminal appelant et un terminal appelé en fonction d'un message de demande d'établissement de liaison transmis par le terminal appelant et d'un message de réponse transmis par le terminal appelé en réponse au message de demande d'établissement de liaison, et établir au moins deux canaux multimédias entre le terminal appelant et le terminal appelé ;
une unité de transmission (42), configurée pour transmettre un flux multimédia par le biais d'un premier canal multimédia en fonction de capacités multimédias négociées ; et
une unité de commutation (43), configurée pour, quand une anomalie de la transmission de flux multimédia dans le premier canal multimédia est détectée, sélectionner un autre des au moins deux canaux multimédias comme un second canal multimédia et commuter un flux multimédia du premier canal multimédia au second canal multimédia pour la transmission, dans lequel le premier canal multimédia et le second canal multimédia sont situés dans des réseaux différents ;
dans lequel l'unité d'établissement de canal multimédia est configurée en outre pour :
analyser syntaxiquement le message de demande d'établissement de liaison transmis par le terminal appelant au terminal appelé, dans lequel le message de demande d'établissement de liaison transporte au moins deux adresses de protocole Internet, IP, de canal multimédia et au moins deux numéros de port de canal multimédia correspondants du terminal appelant ;
renvoyer le message de réponse transmis par le terminal appelé en réponse au message de demande d'établissement de liaison au terminal appelant, dans lequel le message de réponse transporte au moins deux adresses IP de canal multimédia et au moins deux numéros de port de canal multimédia correspondants du terminal appelé ; et
établir les canaux multimédias entre les ports de terminal appelant correspondant aux numéros de port de canal multimédia du terminal appelant et les ports de terminal appelé correspondant aux numéros de port de canal multimédia du terminal appelé.

8. Dispositif selon la revendication 7, dans lequel l'unité d'établissement de canal multimédia est configurée en outre pour :
transporter les au moins deux adresses IP de canal multimédia et les au moins deux numéros de port de canal multimédia correspondants du terminal appelant dans le message de demande d'établissement de liaison transmis par le terminal appelant selon un protocole de description de session, SDP ; ou
transporter les au moins deux adresses IP de canal multimédia et les au moins deux numéros de port de canal multimédia correspondants du terminal appelé dans le message de réponse transmis par le terminal appelé en réponse au message de demande d'établissement de liaison selon le SDP.

9. Dispositif selon la revendication 7, dans lequel l'unité de commutation est configurée en outre pour :
analyser un taux de perte de paquets ou une valeur de gigue du flux multimédia reçu par le terminal appelant ; et
quand le taux de perte de paquets ou la valeur de gigue dépasse des valeurs de seuil prédéfinies, déterminer le fait qu'une anomalie survient dans la transmission de flux multimédia dans un premier canal multimédia correspondant à un premier port de terminal appelant du terminal appelant, et notifier au terminal appelant de commuter le flux multimédia du premier canal multimédia correspondant au premier port de terminal appelant du terminal appelant à un second canal multimédia correspondant à un second port de terminal appelant pour la transmission.

10. Dispositif selon la revendication 9, dans lequel le premier canal multimédia correspondant au premier port de terminal appelant et le second canal multimédia correspondant au second port de terminal appelant sont situés dans des réseaux différents, le premier port de terminal appelant établit un seul canal multimédia avec un premier port de terminal appelé et le premier port de terminal appelé établit un seul canal multimédia avec le premier port de terminal appelant.

11. Dispositif selon la revendication 7, dans lequel l'unité de commutation est configurée pour :
analyser un débit de paquets de données ou une valeur de gigue du flux multimédia reçu par le terminal appelé ; et
quand le taux de perte de paquets ou la valeur de gigue dépasse des valeurs de seuil prédéfinies, déterminer le fait qu'une anomalie dans la transmission de flux multimédia dans le premier canal multimédia correspondant au premier port de terminal appelé du terminal appelé, et notifier au terminal appelé de commuter le flux multimédia du premier canal multimédia correspondant au premier port de terminal appelé du terminal appelé à un second canal multimédia correspondant à un second port de terminal appelé pour la transmission.

12. Dispositif selon la revendication 11, dans lequel le premier canal multimédia correspondant au premier port de terminal appelé et le second canal multimédia correspondant au second port de terminal appelé sont situés dans des réseaux différents, le premier port de terminal appelé établit un seul canal multimédia avec le premier port de terminal appelant et le premier port de terminal appelant établit un seul canal multimédia avec le premier port de terminal appelé.
